# FASCICULE DE BREVET EUROPEEN

(11) **EP 1 867 263 B1**
(45) Date de publication et mention de la délivrance du brevet: **12.05.2010**
(21) Numéro de dépôt: 07290710.8
(22) Date de dépôt: 07.06.2007
(51) Int. Cl.: A47J 37/06

(54) **Appareil de cuisson du type gaufrier**
Kochgerät vom Typ Waffeleisen
Waffle-maker type cooking appliance

(30) Priorité: 15.06.2006 FR 0605356
(43) Date de publication de la demande: 19.12.2007
(73) Titulaire: SEB SA, 69130 Ecully (FR)
(72) Inventeur: Bouvier, Pierre, 38300 Bourgoin-Jallieu (FR); Lubowicki, Jean-Pierre, 74540 Gruffy (FR)
(74) Mandataire: Lemoine, Jean-Sébastien

(56) Documents cités:
- FR-A1- 2 855 385
- US-A- 1 526 123
- US-A1- 2004 129 148

## Description

La présente invention concerne un appareil électroménager du type gaufrier, c'est à dire un appareil comprenant deux sous-ensembles de cuisson articulés entre eux, par exemple un appareil pour la cuisson de gaufres, de viandes, de croques-monsieurs, ou de madeleines, ou encore un appareil multifonction pouvant être utilisé dans au moins deux des configurations précitées.

Cependant, surtout dans le cas d'appareil électroménager où, forcément, les plaques de cuisson qui ne sont pas dans leur position d'utilisation sont séparés de l'appareil, l'utilisateur peut se trouver facilement encombré par des plaques de cuisson séparés du reste de l'appareil, ne pas savoir où les ranger (notamment quand l'emballage d'origine a été détruit), ne pas savoir où les avoir ranger, les oublier ou même les égarer, notamment quand l'appareil est utilisé loin de son lieu de rangement.

La présente invention vise à remédier aux inconvénients précités.

Selon l'invention, l'appareil électroménager comprend au moins une cavité pour le rangement des plaques de cuisson.

Ainsi, il est possible, même dans le cas d'un appareil électroménager multifonction de ne pas séparer les plaques de cuisson du reste de l'appareil, et ainsi d'avoir ce dernier toujours complet, prêt à être utilisé.

D'autres particularités et avantages apparaîtront dans la description d'un mode de réalisation d'un appareil conforme à la présente invention donné à titre d'exemple non limitatif et illustré dans les dessins mis en annexe dans lesquels :
La figure 1 est une vue en perspective d'un appareil conforme au présent mode de réalisation, la cavité étant vide,
La figure 2 est une vue similaire à la figure 1, des plaques de cuisson étant disposées dans la cavité,
La figure 3 est une vue de côté de l'appareil, la cavité étant vide et
La figure 4 est une vue de face, la cavité comprenant des plaques de cuisson.

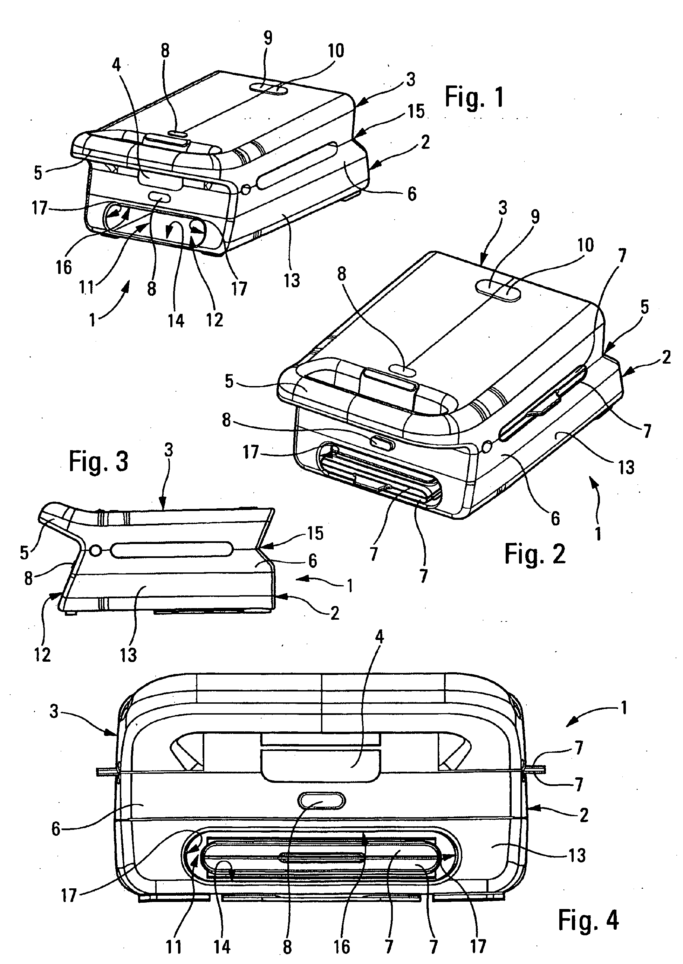

Les figures 1 à 4 illustrent un appareil électroménager 1 comprenant deux sous-ensembles de cuisson 2,3 (un sous-ensemble inférieur 2 et un sous-ensemble supérieur 3) articulées entre eux. Les deux sous-ensembles de cuisson 2,3 sont articulés au niveau de leur face arrière par une charnière 15 entre une position fermée dans laquelle ils se recouvrent, et une position ouverte dans laquelle ils forment un dièdre ayant un angle d'environ 90°.

L'appareil électroménager 1 comprend un mécanisme de verrouillage 4 (ici, du type à encliquetage) permettant le verrouillage des deux sous-ensembles de cuisson 2,3 dans leur position fermée. Ce mécanisme de verrouillage 4 comprend un organe pivotant dont une partie crochetée permet le verrouillage des deux sous-ensembles de cuisson et une partie forme un bouton de déverrouillage permettant la libération des deux sous-ensembles de cuisson 2,3 l'un de l'autre. Dans le présent mode de réalisation, le sous-ensemble supérieur 3 comprend une poignée 5 permettant sa manipulation.

Chaque sous-ensemble de cuisson 2,3 comprend une coque 6, une plaque de cuisson 7 adaptée à recevoir un aliment à cuire, et une résistance électrique de chauffe permettant de fournir à la plaque de cuisson 7 l'énergie nécessaire pour la cuisson de l'aliment.

La coque 6 forme le corps du sous-ensemble de cuisson 2,3 correspondant, et, dans le présent mode de réalisation, est en matière plastique. Dans le présent exemple, la coque 6 supérieure porte la poignée 5 (ici, la poignée fait partie intégrante de la coque 5)

La plaque de cuisson 7 est amovible de la coque 6 correspondante et, dans le présent mode de réalisation, est réalisée en aluminium moulé sur lequel un revêtement antiadhésif a été déposé. A la plaque de cuisson 7 est associé un mécanisme de maintien (ici, du type à enliquetage) permettant de maintenir la plaque de cuisson 7 contre la coque 6. Ce mécanisme de maintien comprend un bouton de déblocage 8 qui permet de libérer la plaque de cuisson 7 de la coque 6.

La résistance électrique de chauffe est disposée dans la coque 6, sous la plaque de cuisson 7, et, dans le présent mode de réalisation, elle est en contact avec la plaque de cuisson 7, la transmission de l'énergie se faisant par conduction. L'énergie fournie par la résistance électrique de chauffe est régulée, un thermostat étant en contact avec la plaque de cuisson. Par ailleurs, l'appareil électroménager 1 comprend également un cordon secteur permettant son alimentation électrique ainsi qu'un premier voyant 9 permettant d'informer s'il est sous tension, et un second voyant 10 permettant d'informer que les plaques de cuisson 7 ont atteint une température prédéterminée.

De plus, dans le présent mode de réalisation, chaque sous-ensemble de cuisson 2,3 comprend un réflecteur thermique qui est disposé entre la résistance électrique et la coque 6 de façon à protéger cette dernière de la chaleur dégagée par la première.

Afin de ranger les plaques de cuisson 7 quand elles sont séparées des coques 6, notamment dans le cas où l'appareil électroménager 1 comprend plusieurs jeux de plaques 7 pour pouvoir être utilisé pour la cuisson de différents aliments (viandes, gaufres, madeleines, beignets, croques-monsieurs...), l'appareil 1 a au moins une cavité 11 pour le rangement des plaques (ici, une cavité 11 permettant le rangement de deux plaques 7).

Dans le présent mode de réalisation, la cavité 11 possède une ouverture 12 qui permet le passage des plaques de cuisson 7 et qui est accessible de l'extérieur de l'appareil 1, quelle que soit la position relative des deux sous-ensembles de cuisson 2,3. Cette particularité facilite le rangement. Cette facilité est augmentée du fait que l'ouverture 12 débouche sur la face avant de l'appareil électroménager 1 qui est à l'opposée de la face portant la charnière 15.

La cavité 11 est réalisée dans un logement 13 solidaire du sous-ensemble de cuisson inférieur 2 (plus précisément, fixé à la coque 6 inférieure, et éventuellement monobloc et intégré à cette coque 6). La cavité 11 est délimitée par une paroi arrière qui est située à l'opposé de l'ouverture 12, une paroi de fond 14 sur laquelle les plaques de cuisson 7 peuvent reposer, une paroi supérieure 16 formant une délimitation avec l'espace dans lequel sont disposés le système d'alimentation et de contrôle de la résistance électrique de chauffe du sous-ensemble inférieur 2, et deux parois latérales 17.

La présente invention n'est pas limitée au présent mode de réalisation et de nombreuses variantes peuvent y être appliquées.

Il serait ainsi possible que chaque coque soit en métal, que chaque plaque de cuisson soit en aluminium embouti, et/ou que la résistance électrique de chauffe soit à distance de la plaque de cuisson, la transmission de l'énergie se faisant alors par rayonnement.

Il aurait été possible que le logement dans lequel est réalisé la cavité de rangement soit un organe séparable de la coque inférieure, et/ou que l'ouverture de la cavité débouche sur une des deux faces latérales de l'appareil qui sont perpendiculaires à la face arrière portant la charnière.

De plus, la cavité pourrait comprendre des moyens permettant d'éviter toute sortie intempestive des plaques, par exemples des systèmes d'immobilisation par passage d'un point dur (notamment dans le cas ou chaque paroi latérale de la cavité comprend des rainures de réception de bords périphériques des plaques), et/ou un couvercle de fermeture de l'ouverture (pouvant comprendre également un système de verrouillage par encliquetage ou passage d'un point dur) qui présente également l'avantage de protéger les plaques de cuisson de la poussière ou de projection d'aliments en cours de cuisson sur d'autres plaques de cuisson.

Par ailleurs, la cavité (l'ensemble des cavités) de l'appareil pourraient pouvoir contenir plus de deux plaques de cuisson, notamment selon le nombre de jeux de plaques pouvant être utilisé avec l'appareil.

## Revendications

1. Appareil électroménager (1) du type gaufrier comprenant deux sous-ensembles de cuisson (2,3) articulées entre eux entre une position ouverte et une position fermée, chaque sous-ensemble de cuisson (2,3) comprenant une coque (6) formant le corps du sous-ensemble (2,3) et une plaque de cuisson amovible de la coque (6) et adaptée à recevoir un aliment à cuire, **caractérisé en ce qu'**il comprend au moins une cavité (11) pour le rangement des plaques de cuisson.

2. Appareil électroménager (1) selon la revendication 1, **caractérisé en ce que** chaque cavité (11) de rangement a une ouverture (12) de passage des plaques qui est accessible de l'extérieur de l'appareil (1) quelle que soit la position relative des deux sous-ensembles de cuisson (2,3).

3. Appareil électroménager (1) selon la revendication 2, **caractérisé en ce que** pour chaque cavité (11), l'ouverture (12) est réalisée dans la face avant de l'appareil opposée à la face portant la charnière (15) d'articulation des deux sous-ensembles de cuisson (2,3).

4. Appareil électroménager (1) selon l'une des revendications 1 à 3, **caractérisé en ce qu'**il ne comprend qu'une seule cavité (11) adaptée à recevoir deux plaques de cuisson.

5. Appareil électroménager (1) selon la revendication 4, **caractérisé en ce que** la cavité (11) est portée par le sous-ensemble inférieur de cuisson (2).

6. Appareil électroménager (1) selon la revendication 5, **caractérisé en ce que** la cavité (11) est réalisée dans un logement (13) fixé à la coque inférieure (6).

7. Appareil électroménager (1) selon la revendication 6, **caractérisé en ce que** le logement (13) est monobloc avec la coque inférieure (6).

## Claims

1. Waffle-type electric household appliance (1) including two cooking sub-assemblies (2, 3) hinged together between an open position and a closed position, each cooking sub-assembly (2, 3) including a shell (6) forming the body of the sub-assembly (2, 3) and a cooking plate (7) that can be removed from the shell (6) and suitable for receiving a food item to be cooked, **characterised in that** it includes at least one cavity (11) for storing the cooking plates (7).

2. Electric household appliance (1) of claim 1, **characterised in that** each storage cavity (11) has a pass-through opening (12) for the plates, which is accessible from the exterior of the appliance (1), regardless of the relative position of the two cooking sub-assemblies (2, 3).

3. Electric household appliance (1) of claim 2, **characterised in that** for each cavity (11), the opening (12) is made in the front face of the appliance opposite the face bearing the hinge (15) for the two cooking sub-assemblies (2, 3).

4. Electric household appliance (1) as claimed in one of claims 1 to 3, **characterised in that** it includes only a single cavity (11) suitable for receiving two cooking plates.

5. Electric household appliance (1) of claim 4, **characterised in that** the cavity (11) is borne by the lower cooking sub-assembly (2).

6. Electric household appliance (1) of claim 5, **characterised in that** the cavity (11) is made inside a housing (13) fastened to the lower shell (6).

7. Electric household appliance (1) of claim 6, **characterised in that** the housing (13) is made in a single piece together with the lower shell (6).

## Patentansprüche

1. Elektro-Haushaltsgerät (1) in der Bauart eines Waffeleisens, mit zwei Back-Untereinheiten (2, 3), die untereinander zwischen einer Öffnungsposition und einer Schließposition gelenkig verbunden sind, wobei jede Back-Untereinheit (2, 3) eine den Körper der Untereinheit (2, 3) bildende Schale (6) und eine von der Schale (6) abnehmbare Backplatte aufweist und so ausgebildet ist, dass sie ein zu backendes Nahrungsmittel aufnehmen kann, **dadurch gekennzeichnet, dass** dieses wenigstens einen Hohlraum (11) zum Verstauen der Backplatte aufweist.

2. Elektro-Haushaltsgerät (1) nach Anspruch 1, **dadurch gekennzeichnet, dass** jeder Hohlraum (11) zum Verstauen eine Öffnung (12) zum Hindurchführen der Platten aufweist, die von außerhalb des Geräts (1) zugänglich ist, unabhängig von der relativen Position der beiden Back-Untereinheiten (2, 3).

3. Elektro-Haushaltsgerät (1) nach Anspruch 2, **dadurch gekennzeichnet, dass** für jeden Hohlraum (11), die Öffnung (12) in der Vorderseite des Geräts, entgegengesetzt zu der das Scharniergelenk (15) der beiden Back-Untereinheiten (2, 3) tragenden Seite, ausgebildet ist.

4. Elektro-Haushaltsgerät (1) nach einem der Ansprüche 1 bis 3, **dadurch gekennzeichnet, dass** dieses nur einen einzigen Hohlraum (11) aufweist, der so ausgebildet ist, dass dieser zwei Backplatten aufnehmen kann.

5. Elektro-Haushaltsgerät (1) nach Anspruch 4, **dadurch gekennzeichnet, dass** der Hohlraum (11) durch die untere Back-Untereinheit (2) vorgesehen ist.

6. Elektro-Haushaltsgerät (1) nach Anspruch 5, **dadurch gekennzeichnet, dass** der Hohlraum (11) in einer Aufnahme (13) ausgebildet ist, die an der unteren Schale (6) befestigt ist.

7. Elektro-Haushaltsgerät (1) nach Anspruch 6, **dadurch gekennzeichnet, dass** die Aufnahme (13) mit der unteren Schale (6) einen Monoblock bildet.
